# EUROPÄISCHE PATENTSCHRIFT

(11) **EP 2 129 636 B1**
(45) Veröffentlichungstag und Bekanntmachung des Hinweises auf die Patenterteilung: **15.09.2010**
(21) Anmeldenummer: 08716031.3
(22) Anmeldetag: 26.02.2008
(51) Int. Cl.: C04B 35/109, C04B 35/48

(54) **SCHMELZGEGOSSENES FEUERFESTES ERZEUGNIS**
FUSION-CAST FIREPROOF PRODUCT
PRODUIT RÉFRACTAIRE COULÉ PAR FUSION

(30) Priorität: 28.02.2007 DE 102007010173
(43) Veröffentlichungstag der Anmeldung: 09.12.2009
(73) Patentinhaber: Refractory Intellectual Property GmbH & Co. KG, 1100 Wien (AT)
(72) Erfinder: NILICA, Roland, A-8715 Feistritz (AT); SANTOWSKI, Klaus, A-8130 Frohnleiten (AT)
(74) Vertreter: Becker, Thomas
(86) Internationale Anmeldenummer: PCT/EP2008/001488
(87) Internationale Veröffentlichungsnummer: WO 2008/104354

(56) Entgegenhaltungen:
- EP-A- 0 460 959
- EP-A- 0 633 232
- WO-A-2004/048290
- FR-A- 2 723 583
- JP-A- 2004 099 441

## Beschreibung

Auf Grund seiner guten Korrosionsbeständigkeit eignet sich Zirkondioxid (ZrO₂) hervorragend für die Erstellung von feuerfesten Erzeugnissen.

Wichtige Einsatzgebiete für feuerfeste Erzeugnisse auf Basis von Zirkondioxid liegen beispielsweise im Stahlgießbereich, wo entsprechende Erzeugnisse als Stranggussdüsen, Schieberplatten und als Verschleißteile in besonders stark beanspruchten Bereichen eingesetzt werden.

In Glaswannen werden sühmetzgegossene feuerfeste Erzeugnisse auf Basis von Zirkondioxid eingesetzt.

Zirkondioxid tritt in drei Modifikationen auf. Bei Tieftemperatur liegt Zirkondioxid in einer monoklinen Modifikation vor, die bei etwa 1170°C eine reversible Umwandlung in eine tetragonale Modifikation erfährt. Bei etwa 2300°C findet eine weitere reversible Umwandlung in eine kubische Modifikation des Zirkondioxids statt.

Da die monokline Tieftemperaturmodifikation ein größeres Volumen aufweist als die beiden Hochtempcratürmodifikationen, erfährt ein Erzeugnis auf Basis von Zirkondioxid beim Ober- beziehungsweise Unterschreiten der Umwandlungstemperaturen eine Volumenkontraktion beziehungsweise -ausdehnung. Bei der Herstellung und Anwendung von feuerfesten Erzeugnissen auf Basis von Zirkondioxid führt dies zu Rissen im Erzeugnis.

Aus diesem Grunde ist es bekannt, feuerfeste Erzeugnisse auf Basis von Zirkondioxid durch Zusätze von Oxiden, insbesondere der Oxide Magnesiumoxid (MgO), Calciumoxid (GaO), Yttriumoxid (Y₂O₃) oder Oxide anderer seltener Erden, beispielsweise Ceroxid (CeO₂), zu stabilisieren. Diese Zusätze erhalten die Hochtemperaturmodifikationen metastabil bis zur Raumtemperatur, reduzieren dadurch die anomale Wärmedehnung und ermöglichen somit die Herstellung von Zirkondioxidwerkstoffen.

Eine solche Stabilisierung hat jedoch den Nachteil, dass sie im Einsatz des Erzeugnisses verloren geht. Das zur Stabilisierung benutzte Oxid wandert dabei in die angreifende Umgebung, beispielsweise die Schmelze aus Glas oder Schlacke, was in einer Verringerung des Volumens des Erzeugnisses resultiert. Durch diese Volumenverringerung steigt der korrosive Angriff auf das feuerfeste Erzeugnis.

Im Fall von schmelzgegossenen hochzirkonoxidhaltigen Produkten ist eine Stabilisierung nicht möglich, da diese Produkte neben Zirkonoxid eine Glasphase enthalten, in welche das zur Stabilisierung verwendete Oxid abwandert.

Aus diesem Grund wird eine Stabilisierung des Zirkondioxids zur Verringerung der Rissgefahr bei der Herstellung von schmelzgegossenen feuerfesten Erzeugnissen auf Basis von Zirkondioxid derzeit nicht durchgeführt. Vielmehr wird die bei Über- beziehungsweise Unterschreiten der Umwandlungstemperaturen auftretende Volumenänderung im Zirkondioxiderzeugnis bei schmelzgegossenen Produkten derzeit über die Glasphase abgepuffert. Dabei ist das Zirkondioxid bei schmelzgegossenen Erzeugnissen in eine siliziumdioxidreiche Glasphase eingebettet, die als Puffer für die Modifikationsanderungen des Zirkondioxids beim Aufheizen und Abkühlen wirkt [US 5,679,612 A].

Oftmals ist die Glasphase jedoch nicht in der Lage, die Volumenänderungen beim Aufheizen und Abkühlen des Erzeugnisses auf Basis von Zirkondioxid ausreichend abzupuffern, so dass insbesondere bei der Herstellung des Erzeugnisses Risse auftreten, die im Einsatz zu Abplatzungen am Erzeugnis führen können.

Darüber hinaus spielt der Gehalt an Glasphase im Erzeugnis eine wesentliche Rolle für dessen Verschleiß.

Probleme ergeben sich insbesondere auch beim Abkühlen der Schmelze zur Erstellung schmelzgegossener Erzeugnisse auf Basis von Zirkondioxid. Aufgrund der großen Temperaturunterschiede, die während des Abkühlens der Schmelze und deren Erstarrung auftreten, kommt es zu einem ungünstigen Kristallisationsverhalten, bei dem aufgrund von Feststoffausschcidungen voneinander isolierte Bereiche mit Schmelze entstehen. Bei fortschreitender Erstarrung resultieren hieraus dispers über die erstarrende Schmelze beziehungsweise das Erzeugnis verteilte Lunker. Durch diese Lunker ist die Qualität des Erzeugnisses jedoch erheblich verschlechtert oder das Erzeugnis sogar unbrauchbar.

Die EP 0633232 A1 betrifft ein geschmolzenes Zitkoroxidmaterial, des nach dem Schmelzvorgang abgehählt und zerkleinart wird. Die so gebildete Kornung kann nach behandelt, zum Beispiel oxidiert werden.

Der Erfindung liegt die Aufgabe zu Grunde, ein schmelzgegossenes feuerfestes Erzeugnis auf Basis von Zirkondioxid mit verbesserten Korrosions- und Verschleißeigenschaften zur Verfugung zu stellen. Ferner liegt der Erfindung die Aufgabe zugrunde, das Entstehen von dispers verteilten Lunkern während des Abkühlens der Zirkondioxidschmelze zu unterdrücken.

Anmeldungsgemäß gelöst wird diese Aufgabe durch ein schmelzgegossens feuerfestes Erzeugniss auf Basis von Zirkondioxid gemäß Anspruch 1.

Die Erfindung beruht auf der Grundüberlegung, im Gegensatz zum Stand der Technik auch in schmelzgegossenen Erzeugnissen auf Basis von Zirkondioxid eine Stabilisierung des Zirkondioxids, durch die Zugabe von Magnesiumoxid (MgO) zu erreichen. Diese Stabilisierung des Zirkondioxids durch die Zugabe von Magnesiumoxid wird durch die erfindungsgemäße Erkenntnis erreicht, dass das Abwandern des zur Stabilisierung benutzten Magnesiumoxids in die angreifende Umgebung dadurch verlangsamt oder sogar praktisch verhindert werden kann, da die durch Magnesiumoxid stabilisierten Zirkondioxidkristalle in wenigstens eine magnesiumoxidhaltige Kristallphase eingebettet beziehungsweise von dieser Kristallphase umgeben sind.

Vermutlich resultiert die verlangsamte Abwanderung des das Zirkondioxid stabilisierenden Magnesiumoxids durch die Verringerung des Konzentrationsgefälles zwischen dem stabilisierten Zirkonoxid und der angrenzenden Kristallphase.

Im anmeldungsgemäßen Erzeugnis umgibt die magnesiunioxidhaltige Kristallphase damit die durch das MgO stabilisierten Zirkondioxidkristalle und unterstützt damit die Stabilisierung des Zirkondioxids beziehungsweise hält diese Stabilisierung aufrecht. Das anmeldungsgemaße schmelzgegossene feuerfeste Erzeugnis auf Basis von Zirkondioxid hat damit gegenüber den aus dem Stand der Technik bekannten schmelzgegossenen Erzeugnisse auf Basis von Zirkondioxid wesentlich verbesserte Korrosions- und Verschleißcigcnschaften. Die Neigung zur Rissbildung am Erzeugnis bei der Kühlung der Schmelze kann deutlich reduziert werden.

Gleichzeitig kann das anmeldungsgemäße Erzeugnis nahezu oder sogar praktisch vollständig frei von dispers verteilten Lunkern zur Verfügung gestellt werden. Dies ist eine Folge eines äußerst günstigen Kristallisationsverhaltens des anmeldungsgewäßen Erzeugnisses, das vermutlich auf dem kleineren Schmelzintervall des anmeldungsgemäßen Systems (MgO-stabilisiertes ZrO₂ - magnesiumoxidhaltige Kristallphase) gegenüber den üblichen Systemen (ZrO₂ - SiO₂) beruht.

Bevorzugt sind die durch MgO stabilisierten Zirkondioxidkristalle von wenigstens einer der folgenden magnesiumoxidhaltigen Kristallphasen umgeben: Forsterit (Mg₂SiO₄), Enstatit (Magnesiummetasilikat; MgSiO₃)_{;} Cordierit (2 MgO · 2 Al₂O₃ · 5 SiO₂) oder Spinell (MgO · Al₂O₃).

Die die stabilisierten Zirkondioxidkristalle im anmeldungsgemäßen Erzeugnis umgebende magnesiumoxidhaltige Kristallphase ist demnach keine Kristallphase auf Basis MgO und ZrO₂.

Eine besonders vorteilhafte Wirkung im anmeldungsgemä$en Erzeugnis zeigt Forsterit, so dass im anmeldungsgemäßen schmelzgegossenen feuerfesten Erzeugnis die stabilisierten Zirkondioxidkristalle Bevorzugt von einer Kristallphase aus Forsterit umgeben sind.

Bevorzugt erfolgt die Bildung der magnesiumoxidhaltigen Kristallphasen im anmeldungsgemäßen Erzeugnis in-situ bei dessen Herstellung, also insbesondere während des Abkühlen nach dem Erschmelzen. Auf diese Weise ist es möglich, die Bildung der magnesiumoxidhaltigen Kristallphasen gezielt durch die Art und Menge der Rohstoffkomponenten zu beeinflussen.

Um eine solche in-situ-Bildung der magnesiumoxidhaitigen Kristallphasen während der Herstellung des anmeldungsgemtäßen Erzeugnisses zu erreichen, werden zur Erstellung des anmeldungsgemäßen Erzeugnisses gezielt Rohstoffkomponenten gewählt, die zum einen die MgO-Stabilisierung des Zirkondioxides bewirken und zum anderen zur Bildung einer magnesiumoxidhaltigen Kristallphase um die Zirkondioxidkristalle fuhren.

Dabei kann es ausreichend sein, das anmeldungsgemäße Erzeugnis allein aus drei Rohstoffkomponenten zu erstellen:
1. Einer ZrO₂-Rohstoffkomponente.
2. Einer MgO-Rohstoffkomponente.
3. Wenigstens einer weiteren Rohstoffkomponente (nachfolgend auch "weitere Rohstoffkomponente" genannt), die mit einem Teil der MgO-Rohstoffkomponente eine magnesiumoxidhaltige Kristallphase bildet.

Die weitere Rohstoffkomponente wird in einer solchen Menge zugegeben, dass sie vollständig mit einem Teil der MgO-Rohstoffkomponente während der Herstellung des anmeldungsgemäßen Erzeugnisses eine magnesiumoxidhaltige Kristallphase bildet. Der verbleibende Teil der MgO-Rohstoffkomponente stabilisiert das ZrO₂.

Zur Bildung einer magnesiumoxidhaltigen Kristallphase in Form von Forsterit oder Enstatit kann beispielsweise eine weitere Robstoffkomponente in Form SiO₂ gewählt werden.

Zur Bildung einer magnesiumoxidhaltigen Kristallphase in Form von Cordierit kann beispielsweise eine erste weitere Rohstoffkomponente in Form von Al₂O₃ und eine zweite weitere Rohstoffkömponente in. Form von SiO₂ gewählt werden. Beispielsweise kann hier auch eine sowohl Al₂O₃ als auch SiO₂ enthaltende weitere Komponente gewählt werden, zum Beispiel Sillimanit oder Andalusit.

Zur Bildung einer magnesiumoxidhaltigen Kristallphase in Form von Spinell kann beispielsweise eine weitere Rohstofflcomponente in Form Al₂O₃ gewählt werden.

Die Anteile der verschiedenen Komponenten im anmeldungsgemäßen Erzeugnis können beispielsweise wie folgt sein, wobei die Angaben jeweils in Gewichts-% (Masse-%) erfolgen und auf die Gesamtmasse des Erzeugnisses bezogen sind.

Der Anteil an der magnesiumoxidhaltigen Kristallphase soll bei ≥ 0,5 % liegen, also beispielsweise auch bei ≥ 1 %, bei ≥ 1,5 % oder bei ≥ 2 %. Die Obergrenze des Anteils an magnesiumoxidhaltiger Kristallphase kann beispielsweise bei ≤ 10 % liegen, also beispielsweise auch bei ≤ 8 %, bei ≤ 6 %, bei ≤ 5 % oder bei ≤ 4 %.

Demnach kann der Anteil an magnesiumoxidhaltiger. Kristallphase beispielsweise bei 0,5 bis 10 % liegen, also beispielsweise auch bei 1 bis 8 %, bei 1 bis 6 %, bei 2 bis 5 % oder bei 2 bis 4 %.

Bei dem anmeldungsgemäßen schmelzgegossenen Erzeugnis auf Basis von stabilisiertem Zirkondioxid handelt es sich bevorzugt um ein hochzirkonoxidhaltiges Produkt (HZFC-Produkt).

Der Anteil an Zirkondioxid kann beispielsweise bei ≥ 70 % liegen, also beispielsweise auch bei ≥ 80 %, bei ≥ 85 % oder bei ≥ 90 %. Hinsichtlich seines Maximalanteils kann der Anteil an Zirkondioxid beispielsweise bei ≤ 98 % liegen, also beispielsweise auch bei ≤ 97 %, bei ≤ 96 % oder bei ≤ 95 %.

Demnach kann der Anteil an Zirkondioxid beispielsweise bei 70 bis 98 % liegen, also beispielsweise auch bei 80 bis 98 %, bei 85 bis 97 %, bei 90 bis 96 % oder bei 90 bis 95 %.

Der Anteil des MgO im anmeldungsgemäßen Erzeugnis soll beispielsweise ≥ 1 % sein, beispielsweise ≥ 2 %. Das MgO kann beispielsweise in Maximalanteilen von ≤ 10 %, also beispielsweise auch in Anteilen von ≤ 8 %, von ≤ 6 % oder von ≤ 4 % vorliegen.

MgO kann im aumeldungsgemäßen Erzeugnis beispielsweise in Anteilen von 1 bis 10 %, von 2 bis 8 %, von 2 bis 6 % oder von 2 - 4 % vorliegen.

Der vorstehende Anteil an MgO liegt im anmeldungsgemäß6n Erzeugnis teilweise zur Stabilisierung des Zirkondioxids vor und teilweise in der magnesiumoxidhaltigen Kristallphase.

Der der Stabilisierung des Zirkondioxids dienende Anteil an MgO kann anmeldungsgemäß über dem Anteil an MgO in der magnesinmoxidhalttgen Kristallphase liegen. Dabei kann anmeldungsgemäß vorgesehen sein, dass das Verhältnis des Anteils an MgO, das zur Stabilisierung des ZrO₂ dient, zu dem Anteil an MgO in der magnesiumoxidhaltigen Kristallphase bei 6/5 bis 15/1, also beispielsweise auch bei 3/2 bis 7/1 liegt.

Neben MgO können weitere Oxide zur Stabilisierung des Zirkondioxid im Erzeugnis vorliegen, beispielsweise eines oder mehrere der Oxide CaO, Y₂O₃ oder CeO₂, beispielsweise in Anteilen von jeweils 0,5 bis 5 %, also beispielsweise auch in Anteilen von 0,5 bis 3 %.

Neben den vorgenannten Komponenten kann das anmeldungsgemäße Erzeugnis Verunreinigungen aufweisen, beispielsweise Fe₂O₃, TiO₂ oder CaO. Diese Verunreinigungen können dem Erzeugnis beispielsweise über verunreinigte Rohstoffe zugeführt worden sein, beispielsweise verunreinigtes Baddeleyit als Rohstoffkomponente für das Zirkondioxid. Insbesondere kann das anmeldungsgemäße Erzeugnis auch Verunreinigungen in Form von HfO₂ (Hafniumdioxid) aufweisen, da natürliche Zirconiumminerale, insbesondere auch Baddeleyit, in der Regel 1 bis 5 % HfO₂ aufweisen. Der Anteil an Verunreinigungen liegt anmeldungsgemäß bevorzugt bei ≤ 5 %, also beispielsweise auch bei ≤ 3 %, bei ≤ 2 % oder bei ≤ 1%.

Zwei beispielhafte Zusammensetzungen eines anmeldungsgemäßen schmelzgegossenen feuerfesten Erzeugnisses sind wie folgt:

### Beispiel 1

| | |
|---|---|
| ZrO₂: | 92,4 % |
| MgO: | 4,6 % |
| SiO₂: | 1,4 % |
| HfO₂ | 1,4 % |
| Sonstige Verunreinigungen: | 0,2 % |

Dieses Erzeugnis weist einen Anteil an Forsterit von 2 % auf. Der Forsterit setzt sich aus dem vollständigen Anteil an SiO₂ und 0,6 % MgO zusammen. Die verbleibenden 4,0 % MgO dienen zur Stabilisierung des ZrO₂.

### Beispiel 2

| | |
|---|---|
| ZrO₂: | 92,4 % |
| MgO: | 3,2 % |
| SiO₂: | 2,8 % |
| HfO_{2:} | 1,4 % |
| Sonstige Verunreinigungen: | 0,2 % |

Dieses Erzeugnis weist einen Anteil an Forsterit von 4 % auf. Der Forsterit setzt sich aus dem vollständigen Anteil an SiO₂ und 1,2 % MgO zusammen. Die verbleibenden 2,0 % MgO dienen zur Stabilisierung des ZrO₂,

Beispielsweise kann ein anmeldungsgemäßes Erzeugnis durch das folgende Verfahren erstellt werden:
Die Rohstoffe Zirkondioxid, Magnesiumoxid und wenigstens eine weitere Komponente, die zusammen mit einem Teil des Magnesiumoxids während des
Herstellungsprozesses eine magnesiumoxidhaltigen Kristallphase bildete werden zunächst gemischt. Dabei werden die Rohstoffmengen derart aufeinander abgestimmt, dass die weitere Komponente während des Herstellungsprozesses mit einem Teil der Magnesiumoxidkomponente vollständig zur Bildung einer magnesiumoxidhaltigen Kristallphase verbraucht wird.

Die Mischung aus den Rohstoffen wird anschließend in einem Elektrolichtbogenofen unter oxidierenden Bedingungen eingeschmolzen.

Schließlich gießt man die Schmelze in Formen oder lässt sie, für die Herstellung von gekörntem Gut, als Block erstarren.

Nach der Erstarrung wird die Schmelze den Formen entnommen und das so erhaltene Erzeugnis kann nach entsprechender mechanischer Bearbeitung (z. B: durch Bohren, Schleifen, Sägen) beispielsweise für die Zustellung von Glasöfen verwendet werden, beispielsweise als Palisadenstein.

Die als Block erstarrte Schmelze kann beispielsweise für die Herstellung von gekörntem Gut verwendet werden, der beispielsweise als gekörnte Rohstoff für die Herstellung von keramisch gebundenen Zirkondioxidsteinen, sonstigen zirkondioxidhaltigen Steinen oder ungeformten zirkondioxidhaltigen Erzeugnissen dienen kann.

## Patentansprüche

1. Schmelzgegossenes feuerfestes Erzeugnis auf Basis von Zirkondioxid, wobei die Zirkondioxidkristalle durch Magnesiumoxid stabilisiert und von wenigstens einer magnesiumoxidhaltigen Kristallphase umgeben sind, deren Anteil, bezogen auf die Gesamtmasse des Erzeugnisses, ≥ 0,5 Masse % beträgt, wobei der Anteil un Magnesiumoxid, bezogen auf die Gesamtmasse, ≥ 1 Masse % beträgt.

2. Schmclzgegossenes feuerfestes Erzeugnis nach Anspruch 1, bei dem die stabilisierten Zirkondioxidkristalle von wenigstens einer der folgenden magnesiumoxidhaltigen Kristallphasen umgeben ist: Forsterit, Enstatit, Cordierit oder Spinell.

3. Schmelzgegossenes feuerfestes Erzeugnis nach Anspruch 1, bei dem der Anteil an rnagnesiumöxidhaltigen Kristallphasen, bezogen auf die Gesamtmasse des Erzeugnisses, 0,5 bis 10 Gew.-% beträgt.

4. Schmelzgegossenes- feuerfestes Erzeugnis nach Anspruch 1, bei dem der Anteil an magnesiumoxidhaitigen Kristallphasen, bezogen auf die Gesamtmasse des Erzeugnisses, 1 bis 8 Gew.-% beträgt:

5. Schmelzgegossenes feuerfestes Erzeugnis nach Anspruch 1, bei dem der Anteil an magnesiumoxidhaltigen Kristallphasen, bezogen auf die Gesamtmasse des Erzeugnisses, 1 bis 6 Gew:-% beträgt.

6. Schmelzgegossenes feuerfestes Erzeugnis nach Anspruch 1, bei dem der Anteil an Zirkondioxid, bezogen auf die Gesamtmasse des Erzeugnisses, 80 bis 98 Gew.-% beträgt.

7. Scbmelzgegossenes feuerfestes Erzeugnis nach Anspruch 1, bei dem der Anteil an Zirkondioxid, bezogen auf die Gesamtmasse des Erzeugnisses, 90 bis 96 Gew.-% beträgt.

8. Schmelzgegossenes feuerfestes Erzeugnis nach Anspruch 1, bei dem der Anteil an Magnesiumoxid, bezogen auf die Gesamtmasse des Erzeugnisses, 1 bis 10 Gew.-% beträgt.

9. Schmelzgegossenes feuerfestes Erzeugnis nach Anspruch 1, bei dem der Anteil an Magnesiumoxid, bezogen auf die Gesamtmasse des Erzeugnisses, 2 bis 6 Gew.-% beträgt.

## Claims

1. A fusion-cast refractory product based on zirconium dioxide, the zirconium dioxide crystals being stabilised by magnesium oxide and surrounded by at least one magnesium oxide-containing crystalline phase, the content of which being ≥ 0,5 wt.%, relative to the total mass of the product, wherein the content of magnesium-oxide, relative to the total mass of the product is ≥ 1 wt.%.

2. A fusion-cast refractory product according to claim 1, in which the stabilised zirconium dioxide crystals are surrounded by at least one of the following magnesium oxide-containing crystalline phases: forsterite, enstatite, cordierite or spinel.

3. A fusion-cast refractory product according to claim 1, in which the content of magnesium oxide-containing crystalline phases, relative to the total mass of the product, amounts to 0.5 to 10 wt.%.

4. A fusion-cast refractory product according to claim 1, in which the content of magnesium oxide-containing crystalline phases, relative to the total mass of the product, amounts to 1 to 8 wt.%.

5. A fusion-cast refractory product according to claim 1, in which the content of magnesium oxide-containing crystalline phases, relative to the total mass of the product, amounts to 1 to 6 wt.%.

6. A fusion-cast refractory product according to claim 1, in which the content of zirconium dioxide, relative to the total mass of the product, amounts to 80 to 98 wt.%.

7. A fusion-cast refractory product according to claim 1, in which the content of zirconium dioxide, relative to the total mass of the product, amounts to 90 to 96 wt.%.

8. A fusion-cast refractory product according to claim 1, in which the content of magnesium oxide, relative to the total mass of the product, amounts to 1 to 10 wt.%.

9. A fusion-cast refractory product according to claim 1, in which the content of magnesium oxide, relative to the total mass of the product, amounts to 2 to 6 wt.%.

## Revendications

1. Produit réfractaire coulé en fusion, à base de dioxyde de zirconium, les cristaux de dioxyde de zirconium étant stabilisés par de l'oxyde de magnésium et entourés par au moins une phase cristalline contenant de l'oxyde de magnésium dont la proportion, par rapport à la masse totale dudit produit, est ≥ 0,5 % en masse ; la proportion dudit oxyde de magnésium étant, par rapport à la masse totale, ≥ 1 % en masse.

2. Produit réfractaire coulé en fusion selon la revendication 1, lesdits cristaux de dioxyde de zirconium stabilisés étant entourés par au moins une des phases cristallines contenant de l'oxyde de magnésium suivantes : forsterite, enstatite, cordiérite ou spinelle.

3. Produit réfractaire coulé en fusion selon la revendication 1, la proportion desdites phases cristallines contenant de l'oxyde de magnésium étant, par rapport à la masse totale dudit produit, comprise entre 0,5 et 10 % en poids.

4. Produit réfractaire coulé en fusion selon la revendication 1, la proportion desdites phases cristallines contenant de l'oxyde de magnésium étant, par rapport à la masse totale dudit produit, comprise entre 1 et 8 % en poids.

5. Produit réfractaire coulé en fusion selon la revendication 1, la proportion desdites phases cristallines contenant de l'oxyde de magnésium étant, par rapport à la masse totale dudit produit, comprise entre 1 et 6 % en poids.

6. Produit réfractaire coulé en fusion selon la revendication 1, la proportion dudit dioxyde de zirconium étant, par rapport à la masse totale dudit produit, comprise entre 80 et 98 % en poids.

7. Produit réfractaire coulé en fusion selon la revendication 1, la proportion dudit dioxyde de zirconium étant, par rapport à la masse totale dudit produit, comprise entre 90 et 96 % en poids.

8. Produit réfractaire coulé en fusion selon la revendication 1, la proportion dudit oxyde de magnésium étant, par rapport à la masse totale dudit produit, comprise entre 1 et 10 % en poids.

9. Produit réfractaire coulé en fusion selon la revendication 1, la proportion dudit oxyde de magnésium étant, par rapport à la masse totale dudit produit, comprise entre 2 et 6 % en poids.
